# EUROPEAN PATENT APPLICATION

(11) **EP 4 311 360 A1**
(43) Date of publication of application: **24.01.2024**
(21) Application number: 21930839.2
(22) Date of filing: 18.03.2021
(51) Int. Cl.: H04W 72/14, H04W 88/02

(54) **CARRIER WAVE SCHEDULING METHOD AND APPARATUS THEREOF, AND SCHEDULING MODE SWITCHING METHOD AND APPARATUS THEREOF**

(71) Applicant: Beijing Xiaomi Mobile Software Co., Ltd., Beijing 100085 (CN)
(72) Inventor: ZHU, Yajun, Beijing 100085 (CN)
(74) Representative: Hughes, Andrea Michelle
(86) International application number: PCT/CN2021/081616
(87) International publication number: WO 2022/193247

(57) **Abstract**

The present disclosure belongs to the technical field of wireless communications. Provided are a carrier wave scheduling method and an apparatus thereof, and a scheduling mode switching method and an apparatus thereof. The scheduling method comprises: a network-side device sending, to a UE, a configuration message of a group of scheduled carrier waves, and sending, to the UE, an association relationship between the group of scheduled carrier waves and a scheduling carrier wave which corresponds to the group of scheduled carrier waves, wherein the configuration message of the group of scheduled carrier waves and the association relationship are used to instruct the UE to determine the group of scheduled carrier waves and the scheduling carrier wave. In this manner, one scheduling carrier wave can correspond to one group of scheduled carrier waves, such that a plurality of PDSCHs/PUSCHs on a plurality of cells can be scheduled by means of one instance of DCI signaling, thereby saving on signaling overheads.

## Description

### TECHNICAL FIELD

The disclosure relates to the field of wireless communication technologies, and more particularly, to a carrier scheduling method and apparatus, a method and an apparatus for switching a scheduling mode.

### BACKGROUND

At present, 5th Generation (5G) New Radio (NR) can be deployed in the same spectrum as Long Term Evolution (LTE), so that a total spectrum capacity can be dynamically shared between the two technologies with high spectrum utilization. However, in a case that LTE and NR share a primary carrier, a problem of insufficient Physical Downlink Control Channel (PDCCH) resources on a Primary Cell (PCell) / Primary Secondary Cell (PSCell) is prone to occur.

In order to solve the problem of insufficient PDCCH resources on the PCell/PSCell in the above scenarios, a Third Generation Partnership Project (3GPP) Rel-17 project proposes a candidate solution of scheduling the PCell/PSCell with a Seconary Cell (SCell), and scheduling two Physical Downlink Shared Channel (PDSCH) with one Downlink Control Information (DCI) signaling.

However, the current 5G NR standard can only support scheduling of one PDSCH/PUSCH in one cell with one DCI signaling, that is, there is a one-to-one correspondence between the scheduling carrier and the scheduled carrier. In this way, the signaling overhead is large.

### SUMMARY

According to a first aspect of embodiments of the disclosure, a carrier scheduling method is provided. The method includes: sending a configuration message of a scheduled carrier group to a user equipment UE; sending, to the UE, an association relationship between the scheduled carrier group and a scheduling carrier corresponding to the scheduled carrier group, in which the configuration message of the scheduled carrier group and the association relationship are configured to indicate the UE to determine the scheduled carrier group and the scheduling carrier.

Optionally, the configuration message of the scheduled carrier group includes numbers of one or more scheduled carrier groups, and numbers of scheduled carriers included in each scheduled carrier group.

Optionally, when the configuration message of the scheduled carrier group includes one or more scheduled carrier groups, the method further includes: sending indication information to the UE, in which the indication information is configured to indicate the UE a number of the scheduling carrier corresponding to each of the scheduled carrier groups.

Optionally, sending the configuration message of the scheduled carrier group to the UE includes: sending the configuration message of the scheduled carrier group to the UE via a first radio resource control RRC signaling.

Optionally, sending the indication information to the UE includes: sending the indication information to the UE via a first medium access control control element MAC CE signaling.

Optionally, sending the indication information to the UE further includes: sending the indication information to the UE via a second RRC signaling and a second MAC CE signaling.

Optionally, sending the indication information to the UE includes: sending the indication information to the UE via a first downlink control information DCI signaling.

Optionally, sending to the UE the association relationship between the scheduled carrier group and the scheduling carrier corresponding to the scheduled carrier group includes: sending the association relationship to the UE via a third RRC signaling and/or a third MAC CE signaling.

Optionally, the method further includes: sending a scheduling mode indication message to the UE, in which the scheduling mode indication message is configured to indicate a scheduling mode adopted by the UE, in which the scheduling mode includes a joint scheduling mode and an independent scheduling mode.

Optionally, sending the scheduling mode indication message to the UE includes: sending the scheduling mode indication message to the UE via a fourth RRC signaling.

Optionally, sending the scheduling mode indication message to the UE includes: sending the scheduling mode indication message to the UE via a fourth MAC CE signaling.

Optionally, the method further includes: switching a scheduling mode of the scheduled carrier group corresponding to the UE, in response to receiving a hybrid automatic repeat request acknowledgement HARQ-ACK message corresponding to a physical downlink shared channel PDSCH carrying the fourth MAC CE signaling.

Optionally, sending the scheduling mode indication message to the UE includes: sending the scheduling mode indication message to the UE via a second DCI signaling.

Optionally, the method further includes: switching a scheduling mode of the scheduled carrier group corresponding to the UE, in response to receiving a feedback acknowledgment signal ACK of the second DCI signaling, or in response to receiving a HARQ-ACK of a PDSCH scheduled by the second DCI signaling, or in response to receiving a uplink physical shared channel PUSCH scheduled by the second DCI signaling.

According to a second aspect of embodiments of the disclosure, a method for switching a scheduling mode is provided. The method includes: sending a scheduling mode indication message to a UE, in which the scheduling mode indication message is configured to indicate a scheduling mode adopted by the UE, and the scheduling modes include a joint scheduling mode and an independent scheduling mode; and receiving a response message from the UE, and switching a scheduling mode of a scheduled carrier group corresponding to the UE according to the response message.

Optionally, sending the scheduling mode indication message to the UE includes: sending the scheduling mode indication message to the UE via an RRC signaling.

Optionally, sending the scheduling mode indication message to the UE includes: sending the scheduling mode indication message to the UE via an MAC CE signaling.

Optionally, switching the scheduling mode corresponding to the UE according to the response message includes: receiving a HARQ-ACK message corresponding to a PDSCH of the MAC CE signaling, and switching the scheduling mode of the scheduled carrier group corresponding to the UE according to the HARQ-ACK message corresponding to the MAC CE signaling.

Optionally, sending the scheduling mode indication message to the UE includes: sending the scheduling mode indication message to the UE via a DCI signaling.

Optionally, switching the scheduling mode corresponding to the UE according to the response message needs to satisfy at least one of following conditions: after receiving a feedback acknowledgment signal ACK of the DCI signaling; after receiving a HARQ-ACK of a PDSCH scheduled by the DCI signaling; or after receiving a PUSCH scheduled by the DCI signaling.

According to a third aspect of embodiments of the disclosure, another carrier scheduling method is provided. The method includes: receiving a configuration message of a scheduled carrier group sent by a network device; receiving an association relationship between the scheduled carrier group and a scheduling carrier corresponding to the scheduled carrier group sent by the network device; and determining the scheduled carrier group and the scheduling carrier according to the configuration message of the scheduled carrier group and the association relationship.

Optionally, determining the scheduled carrier group and the scheduling carrier according to the configuration message of the scheduled carrier group and the association relationship includes: determining the scheduled carrier group to which each scheduled carrier belongs according to the configuration message of the scheduled carrier group; and determining the scheduling carrier according to the association relationship between the scheduled carrier group and the corresponding scheduled carrier.

Optionally, the configuration message of the scheduled carrier group includes numbers of one or more scheduled carrier groups, and numbers of scheduled carriers included in each scheduled carrier group.

Optionally, when the configuration message of the scheduled carrier group includes one or more scheduled carrier groups, the method further includes: receiving indication information sent by the network device, in which the indication information is configured to indicate the UE a number of the scheduling carrier corresponding to each of the scheduled carrier groups.

Optionally, receiving the configuration message of the scheduled carrier group sent by the network device includes: receiving the configuration message of the scheduled carrier group sent by the network device via a first RRC signaling.

Optionally, receiving the association relationship between the scheduled carrier group and the scheduling carrier sent by the network device includes: receiving the association relationship sent by the network device via a third RRC signaling and/or a third MAC CE signaling.

Optionally, the method further includes: receiving a scheduling mode indication message sent by the network device, in which scheduling modes include a joint scheduling mode and an independent scheduling mode; and determining a scheduling mode adopted by the UE according to the scheduling mode indication message.

Optionally, receiving the scheduling mode indication message sent by the network device includes: receiving the scheduling mode indication message sent by the network device via a fourth RRC signaling.

Optionally, receiving the scheduling mode indication message sent by the network device includes: receiving the scheduling mode indication message sent by the network device via a fourth MAC CE signaling.

Optionally, receiving the scheduling mode indication message sent by the network device includes: receiving the scheduling mode indication message sent by the network device via a second DCI signaling.

According to a fourth aspect of embodiments of the disclosure, there is provided a carrier scheduling apparatus. The apparatus includes: a sending module, configured to send a configuration message of a scheduled carrier group to a UE, and send to the UE an association relationship between the scheduled carrier group and a scheduling carrier corresponding to the scheduled carrier group, in which the configuration message of the scheduled carrier group and the association relationship are configured to indicate the UE to determine the scheduled carrier group and the scheduling carrier.

According to a fifth aspect of embodiments of the disclosure, there is provided an apparatus for switching a scheduling mode. The apparatus includes: a sending module, configured to send a scheduling mode indication message to a UE, in which the scheduling mode indication message is configured to indicate a scheduling mode adopted by the UE, and the scheduling modes include a joint scheduling mode and an independent scheduling mode; a receiving module, configured to receive a response message from the UE; and a switching module, configured to switch a scheduling mode of a scheduled carrier group corresponding to the UE according to the response message.

According to a sixth aspect of embodiments of the disclosure, there is provided another carrier scheduling apparatus. The apparatus includes: a receiving module, configured to receive a configuration message of a scheduled carrier group sent by a network device, and receive an association relationship between the scheduled carrier group and a scheduling carrier corresponding to the scheduled carrier group sent by the network device; and a determining module, configured to determine the scheduled carrier group and the scheduling carrier according to the configuration message of the scheduled carrier group and the association relationship.

According to a seventh aspect of embodiments of the disclosure, there is provided a communication device. The device includes a transceiver; a memory; a processor, respectively connected to the transceiver and the memory, and configured to, when executing computer-executable instructions on the memory, control signal transmission and reception of the transceiver and implement the carrier scheduling method provided in the first aspect of embodiments of the disclosure, or the method for switching a scheduling mode provided in the second aspect of embodiments of the disclosure, or the carrier scheduling method provided in the third aspect of embodiments of the disclosure.

According to an eighth aspect of embodiments of the disclosure, there is provided a computer storage medium. Computer-executable instructions are stored on the computer storage medium. When the computer-executable instructions are executed by a processor, the carrier scheduling method provided in the first aspect of embodiments of the disclosure, or the method for switching a scheduling mode provided in the second aspect of embodiments of the disclosure, or the carrier scheduling method provided in the third aspect of embodiments of the disclosure is implemented.

According to a ninth aspect of embodiments of the disclosure, there is provided a computer program product. The computer program product includes a computer program, when the computer program is executed by a processor, the carrier scheduling method provided in the first aspect of embodiments of the disclosure, or the method for switching a scheduling mode provided in the second aspect of embodiments of the disclosure, or the carrier scheduling method provided in the third aspect of embodiments of the disclosure is implemented.

According to the carrier scheduling method and apparatus, the method and apparatus for switching a scheduling mode method provided by embodiments of the disclosure, through the network device, the configuration message of the scheduled carrier group is send to the UE, and the association relationship between the scheduled carrier group and the scheduling carrier corresponding to the scheduled carrier group is sent to the UE. The configuration message of the scheduled carrier group and the association relationship are configured to indicate the UE to determine the scheduled carrier group and the scheduling carrier. Thus, one scheduling carrier can correspond to one scheduled carrier group, so that one DCI signaling can schedule multiple PDSCH/PUSCHs on multiple cells to save signaling overhead.

Additional aspects and advantages of the disclosure will be set forth in part from the following description, and will be apparent in part from the following description, or may be learned by practice of the disclosure.

### BRIEF DESCRIPTION OF THE DRAWINGS

The above and other features of embodiments of the disclosure will become more apparent and readily understood from the following description of embodiments in combination with the accompanying drawings:
FIG. 1 is a schematic flowchart of a carrier scheduling method provided in an embodiment of the disclosure;
FIG. 2 is a schematic flowchart of another carrier scheduling method provided in an embodiment of the disclosure;
FIG. 3 is a schematic flowchart of another carrier scheduling method provided in an embodiment of the disclosure;
FIG. 4 is a schematic flowchart of another carrier scheduling method provided in an embodiment of the disclosure;
FIG. 5 is a schematic flowchart of a method for switching a scheduling mode provided in an embodiment of the disclosure;
FIG. 6 is a schematic flowchart of another carrier scheduling method provided in an embodiment of the disclosure;
FIG. 7 is a schematic structural diagram of a carrier scheduling apparatus provided in an embodiment of the disclosure;
FIG. 8 is a schematic structural diagram of an apparatus for switching a scheduling mode provided in an embodiment of the disclosure;
FIG. 9 is a schematic structural diagram of another carrier scheduling apparatus provided in an embodiment of the disclosure;
FIG. 10 is a schematic structural diagram of a network device provided in an embodiment of the disclosure;
FIG. 11 is a block diagram of a UE provided in an embodiment of the disclosure.

### DETAILED DESCRIPTION

Exemplary embodiments will be described in detail herein, examples of which are illustrated in the accompanying drawings. Where the following description refers to the drawings, the same numerals in different drawings refer to the same or similar elements unless otherwise indicated. The implementations described in the following exemplary embodiments are not intended to represent all implementations consistent with embodiments of the disclosure. Rather, they are merely examples of apparatus and methods consistent with some aspects of embodiments of the disclosure, as recited in the appended claims.

The terms used in embodiments of the disclosure are only for the purpose of describing particular embodiments, and are not intended to limit the embodiments of the disclosure. As used in the embodiments of the disclosure and the appended claims, the singular forms "a" and "the" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used in embodiments of the disclosure to describe various pieces of information, such information should not be limited to these terms. These terms are only used to distinguish the same type of information from each other. For example, without departing from the scope of the embodiments of the disclosure, first information may also be referred to as second information, and similarly, second information may also be referred to as first information. Depending on the context, the words "if" and "in case of' as used herein can be interpreted as "when" or "in a case that" or "in response to determining..."

The following describes in detail embodiments of the disclosure, examples of which are illustrated in the accompanying drawings. The same or similar reference numerals refer to the same or similar elements throughout. The embodiments described below with reference to the accompanying drawings are exemplary, and are intended to explain the disclosure and should not be construed as a limitation of the disclosure.

With a continuous emergence of new Internet applications such as a new generation of Augmented Reality (AR), Virtual Reality (VR), and vehicle-to-vehicle communication, higher requirements are put forward for wireless communication technology, driving a continuous evolution of wireless communication technology to meet needs of new Internet applications. At present, the cellular mobile communication technology is in an evolution stage of a new generation of wireless communication technology. An important feature of the new generation of wireless communication technology is to support a flexible configuration of multiple service types.

Different service types have different transmission requirements for wireless communication technologies. For example, the transmission requirement of an enhanced Mobile Broad Band (eMBB) service focuses on large bandwidth and high speed; the transmission requirement of an Ultra Reliable Low Latency Communication (URLLC) service focuses on relatively high reliability and relatively low latency; the transmission requirement of a massive Machine Type Communication (mMTC) service focuses on massive connections. Therefore, a new generation of wireless communication systems requires flexible and configurable designs to support the transmission requirements of multiple service types.

In the research of wireless communication technologies, a satellite communication is considered as an important aspect of the development of wireless communication technologies in the future. The satellite communication refers to a communication carried out by radio communication equipment on the ground using satellites as relay nodes. The satellite communication system may consist of a satellite part and a ground part. The satellite communication has the following characteristics: first, a communication range is large, a communication between any two points can be carried out within a range covered by radio waves emitted by the satellite; second, it is not easily affected by land disasters, that is, the satellite communication has a higher reliability.

The satellite communication can be used as an important supplement to a terrestrial cellular communication system, with the following advantages:
first, extended coverage: for areas where the terrestrial cellular communication system cannot cover or has a relatively high coverage cost, such as oceans, deserts, remote mountainous areas and other areas, the satellite communication can be used to solve the communication in the above-mentioned areas at a relatively low cost;
second, emergency communication: in the event of a disaster, such as an earthquake, and other extreme circumstances that lead to the unavailability of a ground cellular communication infrastructure, the satellite communication can be used to quickly establish a communication connection and improve rescue efficiency; and
third, providing industry applications: for example, for a delay-sensitive service transmitted over a long distance, the delay of service transmission can be reduced by means of satellite communication.

An initial deployment of a new generation of mobile communication technology, namely 5G NR, usually occurs in areas with relatively high traffic density and relatively high requirements for new services, and then gradually expands its coverage. In the process of gradually deploying new access technologies, a mixed coverage of new technologies and old technologies has become an inevitable requirement of an operator's network. Even in areas where the new technologies have been deployed, it is often necessary to retain the old technologies and coexist for a considerable period of time to ensure continued service for an older equipment that does not support the new technologies.

Currently, 5G NR can be deployed in the same spectrum as LTE, allowing the total spectrum capacity to be dynamically shared between the two technologies with high spectrum utilization. However, in a case that LTE and NR share a primary carrier, the problem of insufficient PDCCH resources on the PCell/PSCell is prone to occur.

In order to solve the problem of insufficient PDCCH resources on the PCell/PSCell in the above scenarios, the 3GPP Rel-17 project proposes a candidate solution of scheduling the PCell/PSCell with a SCell and scheduling two PDSCHs with one DCI signaling.

However, the current 5G NR standard does not yet support scheduling of two PDSCH/Physical Uplink Shared Channel (PUSCH) on two cells with one DCI signaling.

In view of the above problems, the disclosure provides a carrier scheduling method and apparatus, and a method and apparatus for switching a scheduling mode method.

A network device takes a base station as an example. The base station may include multiple cells that provide services for a User Equipment (UE). Depending on specific applications, each cell may contain multiple transmitting receiving points (TRPs), or may be a device in the access network that communicates with a wireless terminal equipment through one or more sectors on an air interface, or other names. For example, the base station involved in embodiments of the disclosure may be a Base Transceiver Station (BTS) in a Global System for Mobile communications (GSM) or a Code Division Multiple Access (CDMA), an NodeB in a Wide-band Code Division Multiple Access (WCDMA), an evolution NodeB (eNB or e-NodeB for short) in an Long Term Evolution (LTE) system, a 5G base station (gNB for short) in a 5G network architecture (next generation system), or a Home evolved Node B (HeNB), a relay node, a femto, a pico, etc., which are not limited in embodiments of the disclosure.

The UE may be a device that provides voice and/or data connectivity to the user, a handheld device with a wireless connection function, a processing device connected to a wireless modem, or the like. In different systems, names of the UE may be different. A wireless UE may communicate with one or more Core Networks (CNs) via a Radio Access Network (RAN). The wireless UE may be a mobile terminal device, such as a mobile phone (or referred to as "cellular" phone), and a computer with mobile terminal equipment, e.g., a portable, pocket-sized, hand-held, computer-built or vehicle-mounted mobile device, which exchange language and/or data with a radio access network.

For example, the UE may be a Personal Communication Service (PCS) phone, a cordless phone, a Session Initiated Protocol (SIP) phone, a Wireless Local Loop (WLL) station, a Personal Digital Assistant (PDA) and other devices. A wireless UE may also be referred to as a system, subscriber unit, subscriber station, mobile station, mobile, remote station, access point, remote terminal, access terminal, user terminal, user agent, or a user device, which is not limited in embodiments of the disclosure.

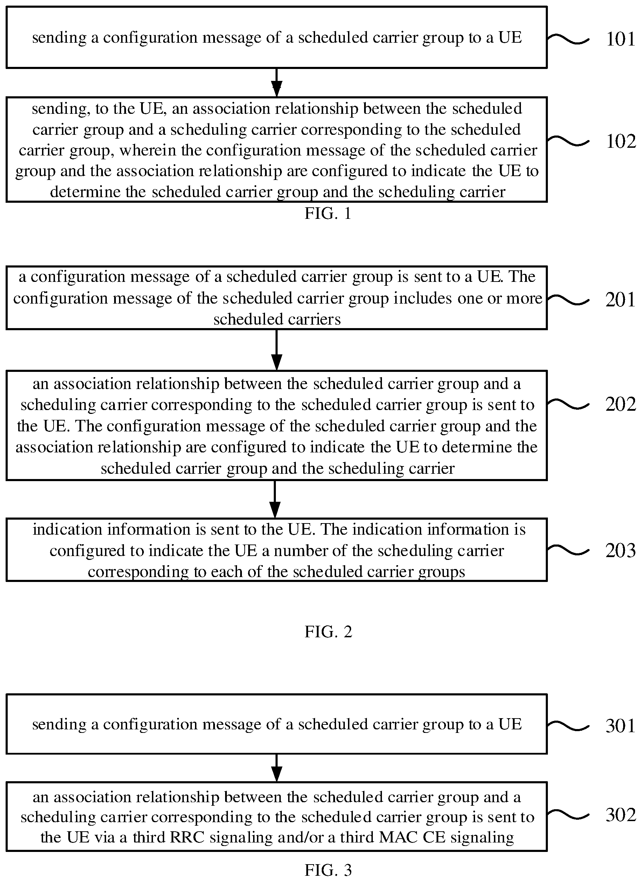

As illustrated in Fig. 1, a carrier scheduling method may include the following steps.

In step 101, a configuration message of a scheduled carrier group is sent to a LTE.

In an embodiment of the disclosure, the scheduled carrier group may include one or more scheduled carriers. The scheduled carrier refers to a carrier that transmits PDSCH or PUSCH.

In one possible implementation of the embodiment of the disclosure, the configuration message of the scheduled carrier group includes one or more scheduled carrier groups, and scheduled carriers included in each scheduled carrier group. Optionally, the configuration message of the scheduled carrier group includes a number of each scheduled carrier group, and numbers of scheduled carriers included in each scheduled carrier group.

In an embodiment of the disclosure, the network device may send the configuration message of the scheduled carrier group to the UE.

In step 102, an association relationship between the scheduled carrier group and a scheduling carrier corresponding to the scheduled carrier group is sent to the UE. The configuration message of the scheduled carrier group and the association relationship are configured to indicate the UE to determine the scheduled carrier group and the scheduling carrier.

In an embodiment of the disclosure, the scheduling carrier refers to a carrier that transmits PDCCH.

In an embodiment of the disclosure, each scheduled carrier in a same scheduled carrier group corresponds to one scheduling carrier.

In an embodiment of the disclosure, a network device may send to the UE the association relationship between the scheduled carrier group and the scheduling carrier corresponding to the scheduled carrier group. Correspondingly, after receiving the configuration message of the scheduled carrier group and the association relationship between the scheduled carrier group and the scheduling carrier corresponding to the scheduled carrier group, the LTE determines the scheduled carrier group and the scheduling carrier corresponding to the scheduled carrier group according to the configuration message of the scheduled carrier group and the association relationship. Thus, one scheduling carrier can correspond to one scheduled carrier group, achieving scheduling of multiple PDSCH/PUSCHs on multiple cells with one DCI signaling, to save signaling overhead.

In one possible implementation of the embodiment of the disclosure, in a case that the configuration message of the scheduled carrier group includes one scheduled carrier groups, the UE may determine the scheduled carrier group to which each scheduled carrier belongs according to the configuration message of the scheduled carrier group, and determine the scheduling carrier corresponding to the scheduled carrier group according to the association relationship between the scheduled carrier group and the corresponding scheduled carrier.

In one possible implementation of the embodiment of the disclosure, in a case that the configuration message of the scheduled carrier group includes a plurality of scheduled carrier groups, the LTE may determine a target scheduling carrier and determine the scheduled carrier group corresponding to the target scheduling carrier according to the above association relationship.

It should be noted that, the above-mentioned example of the disclosure is that step 102 is executed after step 101, but the disclosure is not limited to this. For example, step 102 can also be executed before step 101, or step 102 can also be executed in parallel with step 101, there is no limitation on this.

According to the carrier scheduling method of the embodiments of the disclosure, through the network device, the configuration message of the scheduled carrier group is send to the UE, and the association relationship between the scheduled carrier group and the scheduling carrier corresponding to the scheduled carrier group is sent to the UE. The configuration message of the scheduled carrier group and the association relationship are configured to indicate the UE to determine the scheduled carrier group and the scheduling carrier. Thus, one scheduling carrier can correspond to a scheduled carrier group, so that one DCI signaling can schedule multiple PDSCH/PUSCHs on multiple cells to save signaling overhead.

Another carrier scheduling method is provided in embodiments of the disclosure, and FIG. 2 is a schematic flowchart of another carrier scheduling method provided in an embodiment of the disclosure. The carrier scheduling method is applicable to a network device. The carrier scheduling method may be performed alone, or in combination with any of embodiments of the disclosure or possible implementations of the embodiments, or in combination with any technical solution in the related art..

As illustrated in Figure 2, the carrier scheduling method may include the following steps.

In step 201, a configuration message of a scheduled carrier group is sent to a LTE. The configuration message of the scheduled carrier group includes one or more scheduled carriers.

In an embodiment of the disclosure, step 201 may be implemented in any one of the various embodiments of the disclosure, which is not limited in the embodiment of the disclosure, and will not be described again.

In one possible implementation of embodiments of the disclosure, the network device may send the configuration message of the scheduled carrier group to the UE via an RRC signaling, which is denoted as a first Radio Resource Control (RRC) signaling in the disclosure. Configuration messages.

In step 202, an association relationship between the scheduled carrier group and a scheduling carrier corresponding to the scheduled carrier group is sent to the UE. The configuration message of the scheduled carrier group and the association relationship are configured to indicate the UE to determine the scheduled carrier group and the scheduling carrier.

In an embodiment of the disclosure, step 202 may be implemented in any of the various embodiments of the disclosure, which is not limited in the embodiment of the disclosure, and will not be described again.

In step 203, indication information is sent to the LTE. The indication information is configured to indicate the LTE a number of the scheduling carrier corresponding to each of the scheduled carrier groups.

In an embodiment of the disclosure, the network device may send indication information to the UE. The indication information is configured to indicate the UE a number of the scheduling carrier corresponding to each scheduled carrier group, so that the LTE may, after receiving the indication information, determine the scheduling carrier according to the number of the scheduling carrier corresponding to the scheduled carrier group, and determine the scheduled carrier group corresponding to the scheduling carrier according to the above association relationship.

In one possible implementation of embodiments of the disclosure, the network device may use a Medium Access Control-Control Element (MAC CE) signaling, which is denoted as a first MAC CE signaling in the disclosure, to send the indication information to the UE.

As a possible implementation, when the configuration message of the scheduled carrier group includes one scheduled carrier group, the network device may configure a number of the scheduling carrier corresponding to the scheduled carrier group via the first MAC CE signaling, Thus, after receiving the first MAC CE signaling, the UE may determine the scheduling carrier according to the number of the scheduling carrier corresponding to the scheduled carrier group, and determine the scheduled carrier group corresponding to the scheduling carrier according to the above association relationship.

As another possible implementation, when the configuration message of the scheduled carrier group includes a plurality of scheduled carrier groups, the network device may use the first MAC CE signaling to indicate a number of a scheduling carrier corresponding to one of the plurality of scheduled carrier groups, which is denoted as a number of a target scheduling carrier in the disclosure. Thus, after the LTE receives the first MAC CE signaling, it may determine the target scheduling carrier according to the number of the target scheduling carrier, and determine the scheduled carrier group corresponding to the target scheduling carrier according to the above association relationship.

In another possible implementation of embodiments of the disclosure, the network device may send the indication information to the LTE via the second RRC signaling and the second MAC CE signaling.

As a possible implementation, when the configuration message of the scheduled carrier group includes one scheduled carrier group, the network device can configure the number of the scheduling carrier corresponding to the scheduled carrier group via the RRC signaling. Thus, after the UE receives the RRC signaling, it may determine the scheduling carrier according to the number of the scheduling carrier corresponding to the scheduled carrier group, and determine the scheduled carrier group corresponding to the scheduling carrier according to the above association relationship.

As another possible implementation, when the configuration message of the scheduled carrier group includes a plurality of scheduled carrier groups, the network device may configure a number of a scheduling carrier corresponding to each scheduled carrier group via the second RRC signaling, and indicate a number of a scheduling carrier corresponding to one of the plurality of scheduled carrier groups, which is denoted as a number of a target scheduling carrier in the disclosure, via the second MAC CE signaling. Thus, after the UE receives the second MAC CE signaling, it may determine the target scheduling carrier according to the above number of the target scheduling carrier, and determine the scheduled carrier group corresponding to the target scheduling carrier according to the above association relationship.

In another possible implementation of embodiments of the disclosure, the network device may send the indication information to the UE via a first DCI signaling.

As a possible implementation, when the configuration message of the scheduled carrier group includes one scheduled carrier group, the network device may configure a number of the scheduling carrier corresponding to the scheduled carrier group via the first DCI signaling. Thus, after receiving the first DCI signaling, the UE may determine the scheduling carrier according to the number of the scheduling carrier corresponding to the scheduled carrier group, and determine the scheduled carrier group corresponding to the scheduling carrier according to the above association relationship.

As another possible implementation, when the configuration message of the scheduled carrier group includes a plurality of scheduled carrier groups, the network device may use the first DCI signaling to indicate a number of a scheduling carrier corresponding to one of the plurality of scheduled carrier groups, which is denoted as a number of a target scheduling carrier in the disclosure. Thus, after the UE receives the first DCI signaling, it may determine the target scheduling carrier according to the number of the target scheduling carrier, and determine the scheduled carrier group corresponding to the target scheduling carrier according to the above association relationship.

As an example, the network device may configure the number of the scheduling carrier corresponding to each scheduled carrier group via an RRC signaling, and indicate a number of a scheduling carrier corresponding to one of the plurality of scheduled carrier groups, which is denoted as a number of a target scheduling carrier in the disclosure, via the first DCI signaling. Thus, after receiving the first DCI signaling, the UE may determine the target scheduling carrier according to the number of the target scheduling carrier, and determine the scheduled carrier group corresponding to the target scheduling carrier according to the above association relationship.

Therefore, the network device can send the indication message in various ways, which can improve the flexibility and applicability of the method.

It should be noted that embodiments of the disclosure do not limit the execution sequence of steps 201, 202 and 203. The above only takes steps 201 to 203 in sequence as an example, but the disclosure is not limited to this. For example, it is also possible to execute steps 201, 203, 202 in sequence, or execute steps 202, 201, 203 in sequence, or execute steps 201 to 203 in parallel, and so on.

In the carrier scheduling method according to embodiments of the disclosure, through the network device, the configuration message of the scheduled carrier group is send to the UE, and the association relationship between the scheduled carrier group and the scheduling carrier corresponding to the scheduled carrier group is sent to the LTE. The configuration message of the scheduled carrier group and the association relationship are configured to indicate the LTE to determine the scheduled carrier group and the scheduling carrier. Thus, one scheduling carrier can correspond to one scheduled carrier group, so that one DCI signaling can schedule multiple PDSCH/PUSCHs on multiple cells to save signaling overhead.

It should be noted that, the foregoing possible implementations can be implemented independently, or may be implemented in combination, which is not limited in embodiments of the disclosure.

Another carrier scheduling method is provided in embodiments of the disclosure, and FIG. 3 is a schematic flowchart of another carrier scheduling method provided in an embodiment of the disclosure. The carrier scheduling method is applicable to a network device. The carrier scheduling method may be performed alone, or in combination with any of embodiments of the disclosure or possible implementations of the embodiments, or in combination with any technical solution in the related art.

As illustrated in Figure 3, the carrier scheduling method may include the following steps.

In step 301, a configuration message of a scheduled carrier group is sent to a LTE.

In embodiments of the disclosure, step 301 may be implemented in any of the various embodiments of the disclosure, which is not limited in the embodiment of the disclosure, and will not be described again.

In step 302, an association relationship between the scheduled carrier group and a scheduling carrier corresponding to the scheduled carrier group is sent to the UE via a third RRC signaling and/or a third MAC CE signaling.

The configuration message of the scheduled carrier group and the association relationship are configured to indicate the UE to determine the scheduled carrier group and the scheduling carrier.

In one possible implementation of embodiments of the disclosure, the network device may send the association relationship between the scheduled carrier group and the scheduling carrier corresponding to the scheduled carrier group to the UE via an RRC signaling, which is denoted as the third RRC signaling in the disclosure.

As an example, the network device may configure one scheduling carrier to correspond to one scheduled carrier group via the third RRC signaling.

In another possible implementation of embodiments of the disclosure, the network device may send the association relationship between the scheduled carrier group and the scheduling carrier corresponding to the scheduled carrier group to the UE via an MAC CE signaling, which is denoted as the third MAC CE signaling in the disclosure.

As an example, the network device may configure one scheduling carrier to correspond to one scheduled carrier group via the third MAC CE signaling.

In another possible implementation of embodiments of the disclosure, the network device may send the association relationship between the scheduled carrier group and the scheduling carrier corresponding to the scheduled carrier group to the UE via the third RRC signaling and the third MAC CE signaling.

As an example, the network device may configure one scheduling carrier to correspond to one scheduled carrier group via the third RRC signaling, or the network device may configure one scheduling carrier to correspond to multiple scheduled carrier groups via the third RRC signaling. When the network device configures one scheduling carrier to correspond to the multiple scheduled carrier groups via the third RRC signaling, that is, one scheduling carrier has an associated relationship with the multiple scheduled carrier groups, that is, one scheduling carrier corresponds to multiple association relationships, the network device may also indicate the scheduled carrier group uniquely corresponding to each scheduling carrier via the third MAC CE signaling, that is, indicate a one-to-one correspondence relationship between the scheduled carrier group and the scheduling carrier via the third MAC CE signaling,.

Therefore, the network device can send the association relationship between the scheduled carrier group and the scheduling carrier corresponding to the scheduled carrier group in various ways, which can improve the flexibility and applicability of the method.

In the carrier scheduling method according to embodiments of the disclosure, through the network device, the configuration message of the scheduled carrier group is send to the UE, and the association relationship between the scheduled carrier group and the scheduling carrier corresponding to the scheduled carrier group is sent to the LTE. The configuration message of the scheduled carrier group and the association relationship are configured to indicate the LTE to determine the scheduled carrier group and the scheduling carrier. Thus, one scheduling carrier can correspond to one scheduled carrier group, so that one DCI signaling can schedule multiple PDSCH/PUSCHs on multiple cells to save signaling overhead.

It should be noted that, the foregoing possible implementations may be implemented independently, or may be implemented in combination, which is not limited in this embodiment of the disclosure.

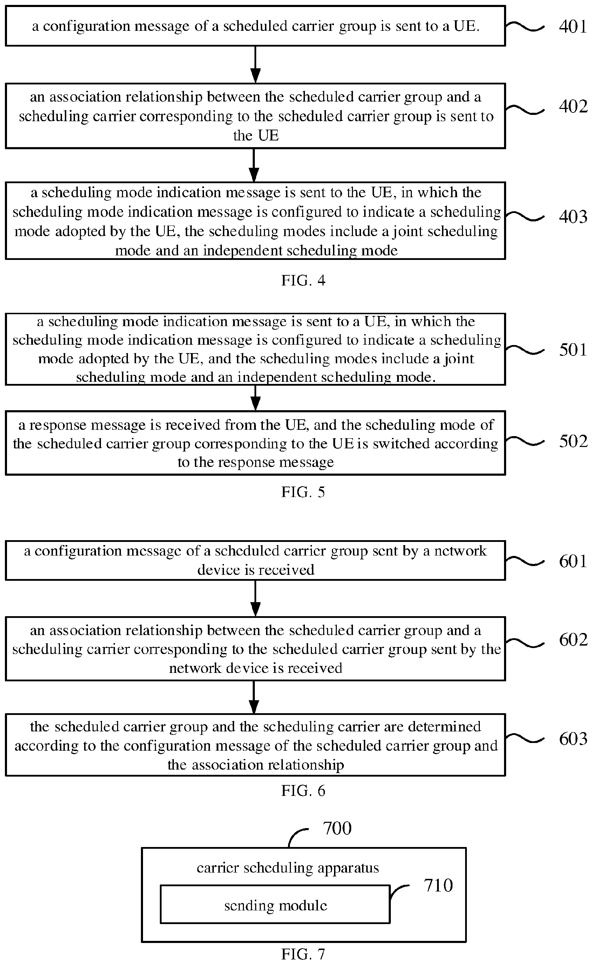

Another carrier scheduling method is provided in embodiments of the disclosure, and FIG. 4 is a schematic flowchart of another carrier scheduling method provided in an embodiment of the disclosure. The carrier scheduling method is applicable to a network device. The carrier scheduling method may be performed alone, or in combination with any of embodiments of the disclosure or possible implementations of the embodiments, or in combination with any technical solution in the related art.

As illustrated in Figure 4, the carrier scheduling method may include the following steps.

In step 401, a configuration message of a scheduled carrier group is sent to a LTE.

In step 402, an association relationship between the scheduled carrier group and a scheduling carrier corresponding to the scheduled carrier group is sent to the UE.

The configuration message of the scheduled carrier group and the association relationship are configured to indicate the UE to determine the scheduled carrier group and the scheduling carrier.

In embodiments of the disclosure, steps 401 and 402 may be implemented in any of the various embodiments of the disclosure, which is not limited in the embodiment of the disclosure, and will not be described again.

In step 403, a scheduling mode indication message is sent to the UE, in which the scheduling mode indication message is configured to indicate a scheduling mode adopted by the UE. The scheduling modes include a joint scheduling mode and an independent scheduling mode.

In embodiments of the disclosure, the joint scheduling mode means that one DCI signaling schedules two or more PDSCH/PUSCHs, that is, one scheduling carrier corresponds to multiple scheduled carriers (the scheduled carrier group includes multiple scheduled carriers).

In embodiments of the disclosure, the independent scheduling mode means that one DCI signaling schedules one PDSCH/PUSCH, that is, one scheduled carrier corresponds to one scheduled carrier (the scheduled carrier group includes one scheduled carrier).

In embodiments of the disclosure, the network device may send the scheduling mode indication message to the UE. The scheduling mode indication message is configured to indicate a scheduling mode adopted by the UE. Correspondingly, after receiving the scheduling mode indication message, the UE may send a response message to the network device. Correspondingly, after receiving the response message, the network device may switch the scheduling mode of the scheduled carrier group corresponding to the UE according to the response message.

In a possible implementation of embodiments of the disclosure, the network device may send a scheduling mode indication message to the LTE via an RRC signaling, which is denoted as a fourth RRC signaling in the disclosure.

In another possible implementation of embodiments of the disclosure, the network device may send a scheduling mode indication message to the LTE via an MAC CE signaling, which is referred to as a fourth MAC CE signaling in the disclosure.

Optionally, as a possible implementation, the network device may switch a scheduling mode of the scheduled carrier group corresponding to the UE, in response receiving a Hybrid Automatic Repeat Request-ACKnowledgement (HARQ-ACK) message corresponding to a PDSCH carrying the fourth MAC CE signaling.

For example, the scheduling mode previously used by the UE is the independent scheduling mode. Assuming that the fourth MAC CE signaling indicates that the scheduling mode used by the UE is the joint scheduling mode, after receiving the fourth MAC CE signaling, the UE may feedback to the network device the HARQ-ACK message corresponding to the PDSCH carrying the fourth MAC CE signaling, so that after receiving the HARQ-ACK corresponding to the PDSCH carrying the fourth MAC CE signaling, the network device may switch the scheduling mode of the scheduled carrier group corresponding to the UE from the independent scheduling mode to the joint scheduling mode.

In another possible implementation of embodiments of the disclosure, the network device may send a scheduling mode indication message to the LTE via a DCI signaling, which is denoted as a second DCI signaling in the disclosure.

As an example, the network device may add a field to the DCI signaling for scheduling PDSCH/PUSCH (in this case, the DCI signaling is the second DCI signaling). The added field is configured to indicate the scheduling mode adopted by the UE model.

For example, an indication field may be added to the second DCI signaling, and the indication message is in the above indication field. For example, when the indication field is 1 bit, the joint scheduling mode can be indicated by 1, and the independent scheduling mode can be indicated by 0. Of course, the joint scheduling mode can also be indicated by 0, and the independent scheduling mode can be indicated by 1. For another example, when the indication field is multi-bit, different bit values can be used to indicate the joint scheduling mode or the independent scheduling mode. Taking the indication field as 2 bits for example, the joint scheduling mode can be indicated by 01, the independent scheduling mode can be indicated by 10, or the joint scheduling mode can be indicated by 11, the independent scheduling mode can be indicated by 00, etc. The disclosure is not limited thereto.

Optionally, as a possible implementation, when the scheduling mode is changed, after the network device receives the HARQ-ACK of the PDSCH scheduled by the second DCI signaling, or, after receiving the PUSCH scheduled the second DCI signaling, the scheduling mode of the scheduled carrier group corresponding to the UEmay be switched.

As another example, the network device may use a new DCI signaling format, including defining a new Radio Network Temporary Identifier (RNTI), to generate the second DCI signaling.

Optionally, as a possible implementation, when the scheduling mode is changed, after the network device receives a feedback ACKnowledgement signal (ACK) of the second DCI signaling, the network device may switch the scheduling mode of the scheduled carrier group corresponding to the UE.

Therefore, the network device can send the scheduling mode indication message in various ways, which can improve the flexibility and applicability of the method.

It should be noted that, embodiments of the disclosure do not limit the execution sequence of steps 401, 402 and 403 , and the above only takes steps 401 , 402 and 403 to be executed in sequence as an example.

In the carrier scheduling method according to embodiments of the disclosure, through the network device, the configuration message of the scheduled carrier group is send to the UE, and the association relationship between the scheduled carrier group and the scheduling carrier corresponding to the scheduled carrier group is sent to the LTE. The configuration message of the scheduled carrier group and the association relationship are configured to indicate the LTE to determine the scheduled carrier group and the scheduling carrier. Thus, one scheduling carrier can correspond to one scheduled carrier group, so that one DCI signaling can schedule multiple PDSCH/PUSCHs on multiple cells to save signaling overhead.

It should be noted that, the foregoing possible implementations may be implemented independently, or may be implemented in combination, which is not limited in this embodiment of the disclosure.

A method for switching a scheduling mode is provided in embodiments of the disclosure, and FIG. 5 is a schematic flowchart of a method for switching a scheduling mode provided in an embodiment of the disclosure. The method for switching a scheduling mode is applicable to the network device. The method for switching a scheduling mode can be executed alone, or can be executed in combination with any of the embodiments of the disclosure or possible implementations in the embodiments, and can also be executed in conjunction with any technical solution in the related art.

As illustrated in Figure 5, the method for switching a scheduling mode may include the following steps.

In step 501, a scheduling mode indication message is sent to a LTE. The scheduling mode indication message is configured to indicate a scheduling mode adopted by the UE, and the scheduling modes include a joint scheduling mode and an independent scheduling mode.

In embodiments of the disclosure, the joint scheduling mode means that one DCI signaling schedules two or more PDSCH/PUSCHs, that is, one scheduling carrier corresponds to multiple scheduled carriers (the scheduled carrier group includes multiple scheduled carriers).

In embodiments of the disclosure, the independent scheduling mode means that one DCI signaling schedules one PDSCH/PUSCH, that is, one scheduling carrier corresponds to one scheduled carrier (the scheduled carrier group includes one scheduled carrier).

In embodiments of the disclosure, the network device may send a scheduling mode indication message to the UE. The scheduling mode indication message is configured to indicate a scheduling mode adopted by the UE, and the scheduling mode includes a joint scheduling mode and an independent scheduling mode.

In one possible implementation of embodiments of the disclosure, the network device may send a scheduling mode indication message to the UE via an RRC signaling.

In another possible implementation of embodiments of the disclosure, the network device may send a scheduling mode indication message to the UE via an MAC CE signaling.

In another possible implementation of embodiments of the disclosure, the network device may send a scheduling mode indication message to the UE via a DCI signaling.

As an example, the network device may add a field to the DCI signaling for scheduling PDSCH/PUSCH. The added field is configured to indicate the scheduling mode adopted by the UE.

For example, an indication field may be added to the second DCI signaling, and the indication message is in the above indication field. For example, when the indication field is 1 bit, the joint scheduling mode can be indicated by 1, and the independent scheduling mode can be indicated by 0. Of course, the joint scheduling mode can also be indicated by 0, and the independent scheduling mode can be indicated by 1. For another example, when the indication field is multi-bit, different bit values can be used to indicate the joint scheduling mode or the independent scheduling mode. Taking the indication field as 2 bits for example, the joint scheduling mode can be indicated by 01, the independent scheduling mode can be indicated by 10, or the joint scheduling mode can be indicated by 11, the independent scheduling mode can be indicated by 00, etc. The disclosure is not limited thereto.

As another example, the network device may use a new DCI signaling format, including defining a new RNTI, to generate the above DCI signaling.

In step 502, a response message is received from the UE, and the scheduling mode of the scheduled carrier group corresponding to the UE is switched according to the response message.

In an embodiment of the disclosure, after receiving the scheduling mode indication message, the UE may send a response message to the network device. Correspondingly, after receiving the response message, the network device may switch the scheduling mode of the scheduled carrier group corresponding to the UE according to the response message.

As a possible implementation, after receiving a HARQ-ACK message corresponding to a PDSCH carrying the above MAC CE signaling, the network device may switch the scheduling mode of the scheduled carrier group corresponding to the UE.

As another possible implementation, after receiving a HARQ-ACK of a PDSCH scheduled by the DCI signaling, or after receiving a PUSCH scheduled by the DCI signaling, the network device can switch the scheduling mode of the scheduled carrier group corresponding to the UE.

As another possible implementation, after receiving a feedback ACK of the DCI signaling, the network device may switch the scheduling mode of the scheduled carrier group corresponding to the UE.

In the method for switching a scheduling mode according to embodiments of the disclosure, the scheduling mode indication message is sent to the UE through the network device, in which the scheduling mode indication message is configured to indicate the scheduling mode adopted by the UE, and the scheduling modes include a joint scheduling mode and an independent scheduling mode, a response message is received from the UE, and the scheduling mode of the scheduled carrier group corresponding to the LTE is switched according to the response message. In this way, it is possible to switch the scheduling mode of the scheduled carrier group corresponding to the LTE by the network device.

It should be noted that, the foregoing possible implementations may be implemented independently, or may be implemented in combination, which is not limited in embodiments of the disclosure.

Another carrier scheduling method is provided in embodiments of the disclosure, and FIG. 6 is a schematic flowchart of another carrier scheduling method provided in an embodiment of the disclosure. The carrier scheduling method is applicable to the UE.

As illustrated in Figure 6, the carrier scheduling method may include the following steps.

In step 601, a configuration message of a scheduled carrier group sent by a network device is received.

In step 602, an association relationship between the scheduled carrier group and a scheduling carrier corresponding to the scheduled carrier group sent by the network device is received.

In step 603, the scheduled carrier group and the scheduling carrier are determined according to the configuration message of the scheduled carrier group and the association relationship.

In one possible implementation of embodiments of the disclosure, the UE may determine the scheduled carrier group to which each scheduled carrier belongs according to the configuration message of the scheduled carrier group; and determine the scheduling carrier according to the association relationship between the scheduled carrier group and the corresponding scheduled carrier.

In one possible implementation of embodiments of the disclosure, the configuration message of the scheduled carrier group includes numbers of one or more scheduled carrier groups, and the numbers of scheduled carriers included in each scheduled carrier group.

In one possible implementation of embodiments of the disclosure, when the configuration message of the scheduled carrier group includes one or more scheduled carrier groups, the UE may receive indication information sent by the network device. The indication information is configured to indicate the LTE a number of the scheduling carrier corresponding to each of the scheduled carrier groups.

In one possible implementation of embodiments of the disclosure, the UE may receive the configuration message of the scheduled carrier group sent by the network device via a first RRC signaling.

In one possible implementation of embodiments of the disclosure, the UE may receive the association relationship sent by the network device via a third RRC signaling and/or a third MAC CE signaling.

In one possible implementation of embodiments of the disclosure, the UE may receive a scheduling mode indication message sent by the network device, in which scheduling modes include a joint scheduling mode and an independent scheduling mode; and determine a scheduling mode adopted by the UE according to the scheduling mode indication message.

In one possible implementation of embodiments of the disclosure, the UE may receive the scheduling mode indication message sent by the network device via a fourth RRC signaling.

In one possible implementation of embodiments of the disclosure, the UE may receive the scheduling mode indication message sent by the network device via a fourth MAC CE signaling.

In one a possible implementation of embodiments of the disclosure, the UE may receive the scheduling mode indication message sent by the network device via a second DCI signaling.

It should be noted that the explanation of the method performed by the network device in any of the foregoing embodiments in FIG. 1 to FIG. 5 is also applicable to the method performed by the UE in this embodiment, and the implementation principle is similar, which will not be repeated here..

In the carrier scheduling method according to embodiments of the disclosure, the UE receives the configuration message of the scheduled carrier group sent by the network device, and receives the association relationship between the scheduled carrier group and the scheduling carrier corresponding to the scheduled carrier group sent by the network device. The scheduled carrier group and the scheduling carrier are determined according to the configuration message of the scheduled carrier group and the association relationship. Thus, one scheduling carrier can correspond to one scheduled carrier group, so that one DCI signaling can schedule multiple PDSCH/PUSCHs on multiple cells to save signaling overhead.

It should be noted that, the foregoing possible implementations may be implemented independently, or may be implemented in combination, which is not limited in this embodiment of the disclosure.

Corresponding to the carrier scheduling method provided by the above-mentioned embodiments of FIG. 1 to FIG. 4, the disclosure further provides a carrier scheduling apparatus. The carrier scheduling method corresponds to the carrier scheduling method, so the implementations of the carrier scheduling method are also applicable to the carrier scheduling apparatus provided in embodiments of the disclosure, and will not be described in detail in embodiments of the disclosure.

FIG. 7 is a schematic structural diagram of a carrier scheduling apparatus provided in an embodiment of the disclosure. The apparatus can be applied to a network device.

As illustrated in FIG. 7, a carrier scheduling apparatus 700 may include a sending module 710.

The sending module 710 is configured to send a configuration message of a scheduled carrier group to a LTE, and send to the LTE an association relationship between the scheduled carrier group and a scheduling carrier corresponding to the scheduled carrier group. The configuration message of the scheduled carrier group and the association relationship are configured to indicate the UE to determine the scheduled carrier group and the scheduling carrier.

Optionally, the configuration message of the scheduled carrier group includes numbers of one or more scheduled carrier groups, and numbers of scheduled carriers included in each scheduled carrier group.

Optionally, when the configuration message of the scheduled carrier group includes one or more scheduled carrier groups, the sending module 710 is further configured to: send indication information to the UE, in which the indication information is configured to indicate the UE a number of the scheduling carrier corresponding to each of the scheduled carrier groups.

Optionally, the sending module 710 is specifically configured to send the configuration message of the scheduled carrier group to the LTE via a first radio resource control RRC signaling.

Optionally, the sending module 710 is specifically configured to send the indication information to the UE via a first medium access control control element MAC CE signaling.

Optionally, the sending module 710 is specifically configured to send the indication information to the LTE via a second RRC signaling and a second MAC CE signaling.

Optionally, the sending module 710 is specifically configured to send the indication information to the LTE via a first downlink control information DCI signaling.

Optionally, the sending module 710 is specifically configured to send the association relationship to the UE via a third RRC signaling and/or the third MAC CE signaling.

Optionally, the sending module 710 is further configured to send a scheduling mode indication message to the UE, in which the scheduling mode indication message is configured to indicate a scheduling mode adopted by the UE, and the scheduling modes include joint scheduling mode and independent scheduling mode.

Optionally, the sending module 710 is specifically configured to send the scheduling mode indication message to the LTE via a fourth RRC signaling.

Optionally, the sending module 710 is specifically configured to send the scheduling mode indication message to the LTE via a fourth MAC CE signaling.

Optionally, the carrier scheduling apparatus 700 may further include:
a first switching module, configured to switch a scheduling mode of the scheduled carrier group corresponding to the UE in response to receiving a hybrid automatic repeat request acknowledgement HARQ-ACK message corresponding to a physical downlink shared channel PDSCH carrying the fourth MAC CE signaling.

Optionally, the sending module 710 is specifically configured to send the scheduling mode indication message to the LTE via the second DCI signaling.

Optionally, the carrier scheduling apparatus 700 may further include:
a second switching module, configured to switch a scheduling mode of the scheduled carrier group corresponding to the UE, in response to receiving a feedback acknowledgment signal ACK of the second DCI signaling, or in response to receiving a HARQ-ACK of a PDSCH scheduled by the second DCI signaling, or in response to receiving a uplink physical shared channel PUSCH scheduled by the second DCI signaling.

The carrier scheduling apparatus according to embodiments of the disclosure, through the network device, sends the configuration message of the scheduled carrier group to the UE, and sends the association relationship between the scheduled carrier group and the scheduling carrier corresponding to the scheduled carrier group to the LTE. The configuration message of the scheduled carrier group and the association relationship are configured to indicate the LTE to determine the scheduled carrier group and the scheduling carrier. Thus, one scheduling carrier can correspond to one scheduled carrier group, so that one DCI signaling can schedule multiple PDSCH/PUSCHs on multiple cells to save signaling overhead.

Corresponding to the method for switching a scheduling mode provided by the above-mentioned embodiment of FIG. 5, the disclosure also provides an apparatus for switching a scheduling mode. Therefore, the implementations of the method for switching a scheduling mode are also applicable to the apparatus for switching a scheduling mode provided by embodiments of the disclosure, and will not be described in detail in the embodiment of the disclosure.

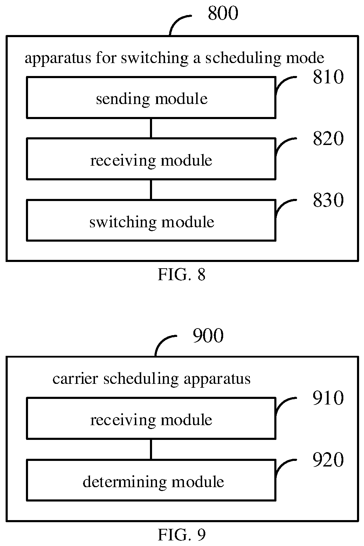

FIG. 8 is a schematic structural diagram of an apparatus for switching a scheduling mode provided in an embodiment of the disclosure. The apparatus can be applied to a network device.

As illustrated in FIG. 8, the apparatus 800 for switching a scheduling mode may include: a sending module 810, a receiving module 820 and a switching module 830.

The sending module 810 is configured to send a scheduling mode indication message to a UE, in which the scheduling mode indication message is configured to indicate a scheduling mode adopted by the UE, and the scheduling modes include a j oint scheduling mode and an independent scheduling mode.

The receiving module 820 is configured to receive a response message from the UE.

The switching module 830 is configured to switch a scheduling mode of a scheduled carrier group corresponding to the UE according to the response message.

Optionally, the sending module 810 is specifically configured to send the scheduling mode indication message to the UE via an RRC signaling.

Optionally, the sending module 810 is specifically configured to send the scheduling mode indication message to the UE via an MAC CE signaling.

Optionally, the switching module 830 is specifically configured to receive a HARQ-ACK message corresponding to a PDSCH of the MAC CE signaling, and to switch the scheduling mode of the scheduled carrier group corresponding to the LTE according to the HARQ-ACK message corresponding to the MAC CE signaling.

Optionally, the sending module 810 is specifically configured to send a scheduling mode indication message to the UE via a DCI signaling.

Optionally, switching the scheduling mode corresponding to the UE according to the response message needs to satisfy at least one of the following conditions: after receiving a feedback acknowledgment signal ACK of the DCI signaling; after receiving a HARQ-ACK of a PDSCH scheduled by the DCI signaling; or after receiving a PUSCH scheduled by the DCI signaling.

The apparatus for switching a scheduling mode according to embodiments of the disclosure, through the network device, sends the scheduling mode indication message to the UE, in which the scheduling mode indication message is configured to indicate the scheduling mode adopted by the UE, and the scheduling modes include a joint scheduling mode and an independent scheduling mode; receives the response message from the UE; and switches the scheduling mode of the scheduled carrier group corresponding to the UE according to the response message. Thereby, the switching of the scheduling mode of the scheduled carrier group corresponding to the UE by the network device can be realized.

Corresponding to the carrier scheduling method provided by the above-mentioned embodiment of FIG. 6, the disclosure also provides a carrier scheduling apparatus. The carrier scheduling apparatus provided by the disclosure is similar to the carrier scheduling method provided by the above-mentioned embodiment of FIG. 6, so the implementations of the carrier scheduling method are also applicable to the carrier scheduling apparatus provided in embodiments of the disclosure, which will not be described in detail in the embodiments of the disclosure.

FIG. 9 is a schematic structural diagram of another carrier scheduling apparatus provided in an embodiment of the disclosure. The apparatus is applicable to a LTE.

As illustrated in FIG. 9, a carrier scheduling apparatus 900 may include: a receiving module 910 and a determining module 920.

The receiving module 910 is configured to receive a configuration message of a scheduled carrier group sent by a network device, and receive an association relationship between the scheduled carrier group and a scheduling carrier corresponding to the scheduled carrier group sent by the network device.

The determining module 920 is configured to determine the scheduled carrier group and the scheduling carrier according to the configuration message of the scheduled carrier group and the association relationship.

Optionally, the determining module 920 is specifically configured to determine the scheduled carrier group to which each scheduled carrier belongs according to the configuration message of the scheduled carrier group, and to determine the scheduling carrier according to the association relationship between the scheduled carrier group and the corresponding scheduled carrier.

Optionally, the configuration message of the scheduled carrier group includes numbers of one or more scheduled carrier groups, and numbers of scheduled carriers included in each scheduled carrier group.

Optionally, when the configuration message of the scheduled carrier group includes one or more scheduled carrier groups, the receiving module 910 is further configured to receive indication information sent by the network device, in which the indication information is configured to indicate the LTE a number of the scheduling carrier corresponding to each of the scheduled carrier groups.

Optionally, the receiving module 910 is specifically configured to receive the configuration message of the scheduled carrier group sent by the network device via a first RRC signaling.

Optionally, the receiving module 910 is specifically configured to receive the association relationship sent by the network device via a third RRC signaling and/or a third MAC CE signaling.

Optionally, the receiving module 910 is further configured to receive a scheduling mode indication message sent by the network device, in which scheduling modes include a joint scheduling mode and an independent scheduling mode.

The determining module 920 is further configured to determine a scheduling mode adopted by the UE according to the scheduling mode indication message.

Optionally, the receiving module 910 is specifically configured to receive the scheduling mode indication message sent by the network device via a fourth RRC signaling.

Optionally, the receiving module 910 is specifically configured to receive the scheduling mode indication message sent by the network device via a fourth MAC CE signaling.

Optionally, the receiving module 910 is specifically configured to receive the scheduling mode indication message sent by the network device via a second DCI signaling.

The carrier scheduling apparatus according to embodiments of the disclosure receives, through the UE, receives the configuration message of the scheduled carrier group sent by the network device, and receives the association relationship between the scheduled carrier group and the scheduling carrier corresponding to the scheduled carrier group sent by the network device; and determines the scheduled carrier group and the scheduling carrier according to the configuration message of the scheduled carrier group and the association relationship. Thus, one scheduling carrier can correspond to one scheduled carrier group, so that one DCI signaling can schedule multiple PDSCH/PUSCHs on multiple cells to save signaling overhead.

In order to realize the above embodiments, the disclosure also proposes a communication device.

The communication device provided by embodiments of the disclosure includes a processor, a transceiver, a memory, and an executable program stored on the memory and capable of being executed by the processor. When the executable program is executed by the processor, the foregoing methods are performed.

The communication device may be the aforementioned network device or LTE.

The processor may include various types of storage media, which are non-transitory computer storage media that can continue to memorize and store information on the communication device after the power is turned off. Here, the communication device includes a network device or a LTE.

The processor may be connected to the memory through a bus or the like, for reading the executable program stored on the memory, for example, at least one of FIG. 1 to FIG. 6.

In order to realize the above embodiments, the disclosure also proposes a computer storage medium.

The computer storage medium provided by the embodiment of the disclosure stores an executable program; after the executable program is executed by a processor, the foregoing method can be implemented, for example, at least one of FIG. 1 to FIG. 6 .

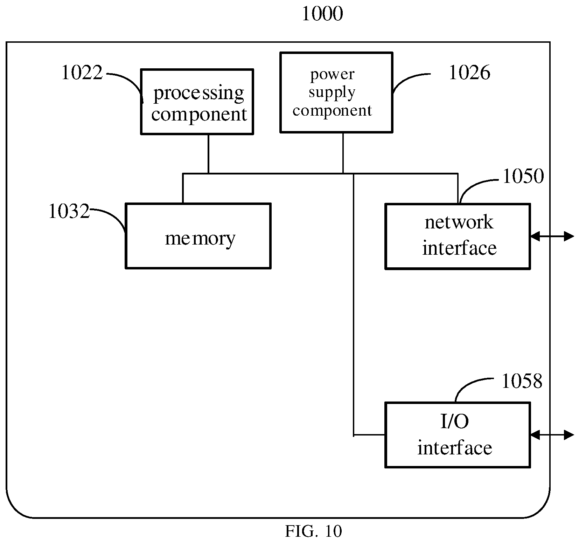

As illustrated in FIG. 10, which is a schematic structural diagram of a network device provided in an embodiment of the disclosure. Referring to Fig. 10, the network device 1000 includes a processing component 1022, which further includes at least one processor, and a memory resource represented by a memory 1032 for storing instructions executable by the processing component 1022, such as an application program. An application program stored in memory 1032 may include one or more modules, each corresponding to a set of instructions. Furthermore, the processing component 1022 is configured to execute instructions to execute any of the aforementioned methods applied to the network device, for example, the methods shown in any of FIGS. 1 to 5 .

The network device 1000 may also include a power supply component 1026 configured to perform power management of the network device 1000, a wired or wireless network interface 1050 configured to connect the network device 1000 to the network, and an input/output (I/O) interface 1058. The network device 1000 can operate based on an operating system stored in the memory 1032, such as Windows Server TM, Mac OS XTM, UnixTM, LinuxTM, FreeBSDTM or the like.

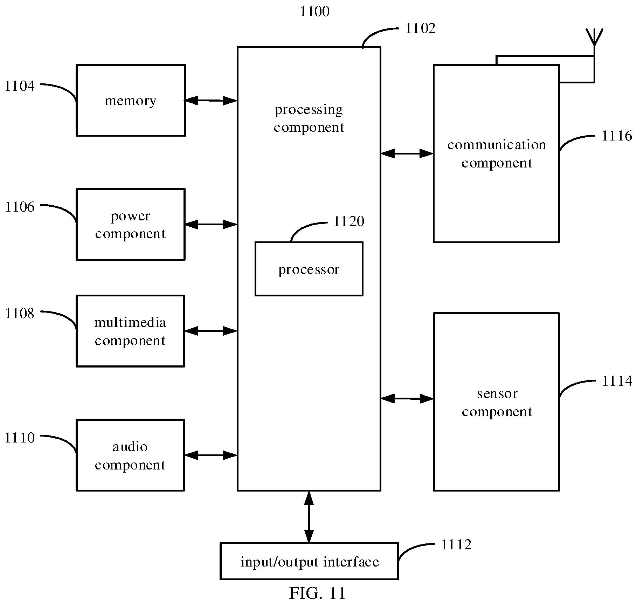

Fig. 11 is a block diagram of a UE 1100 provided by embodiments of the disclosure. For example, UE 1100 may be a mobile phone, computer, digital broadcast user equipment, messaging device, game console, tablet device, medical device, fitness device, personal digital assistant, and the like.

Referring to Fig. 11, the UE 1100 may include at least one of the following components: a processing component 1102, a memory 1104, a power supply component 1106, a multimedia component 1108, an audio component 1110, an input/output (I/O) interface 1112, a sensor component 1114, and a communication component 1116.

The processing component 1102 generally controls the overall operations of the UE 1100, such as operations associated with display, phone calls, data communications, camera operations, and recording operations. The processing component 1102 may include at least one processor 1120 to execute instructions to perform all or part of the steps of the above-described methods. Additionally, the processing component 1102 can include at least one module that facilitates interaction between the processing component 1102 and other components. For example, the processing component 1102 may include a multimedia module to facilitate interaction between the multimedia component 1108 and the processing component 1102.

The memory 1104 is configured to store various types of data to support operations at the UE 1100. Examples of such data include instructions for any application or method operating on the UE 1100, contact data, phonebook data, messages, pictures, videos, etc. The memory 1104 may be implemented by any type of volatile or non-volatile storage device or combination thereof, such as static random access memory (SRAM), electrically erasable programmable read only memory (EEPROM), erasable Programmable Read Only Memory (EPROM), Programmable Read Only Memory (PROM), Read Only Memory (ROM), Magnetic Memory, Flash Memory, Magnetic or Optical Disk.

The power component 1106 provides power to various components of UE 1100. The power components 1106 may include a power management system, at least one power source, and other components associated with generating, managing, and distributing power to UE 1100.

The multimedia component 1108 includes screens that provide an output interface between the UE 1100 and the user. In some embodiments, the screen may include a liquid crystal display (LCD) and a touch panel (TP). If the screen includes a touch panel, the screen may be implemented as a touch screen to receive input signals from a user. The touch panel includes at least one touch sensor to sense touch, swipe, and gestures on the touch panel. The touch sensor may not only sense the boundaries of a touch or swipe action, but also detect wake-up time and pressure associated with the touch or swipe action. In some embodiments, the multimedia component 1108 includes a front camera and/or a rear camera. When the UE 1100 is in an operation mode, such as a shooting mode or a video mode, the front camera and/or the rear camera may receive external multimedia data. Each of the front and rear cameras can be a fixed optical lens system or have focal length and optical zoom capability.

The audio component 1110 is configured to output and/or input audio signals. For example, the audio component 1110 includes a microphone (MIC) that is configured to receive external audio signals when the UE 1100 is in operating modes, such as call mode, recording mode, and voice recognition mode. The received audio signal may be further stored in the memory 1104 or transmitted via the communication component 1116. In some embodiments, the audio component 1110 also includes a speaker for outputting audio signals.

The I/O interface 1112 provides an interface between the processing component 1102 and a peripheral interface module, which may be a keyboard, a click wheel, a button, or the like. These buttons may include, but are not limited to: home button, volume buttons, start button, and lock button.

The sensor component 1114 includes at least one sensor for providing various aspects of status assessment for UE 1100. For example, the sensor component 1114 can detect the on/off state of the UE1100, the relative positioning of the components, such as the display and keypad of the UE1100, the sensor component 1114 can also detect a position change of the UE1100 or a component of the UE1100, a presence or an absence of contact of the user on the UE1100, an orientation or acceleration/deceleration of the UE1100, and a temperature change of the UE1100. The sensor assembly 1114 may include a proximity sensor configured to detect the presence of nearby objects in the absence of any physical contact. The sensor assembly 1114 may also include a light sensor, such as a CMOS or CCD image sensor, for use in imaging applications. In some embodiments, the sensor assembly 1114 may also include an acceleration sensor, a gyroscope sensor, a magnetic sensor, a pressure sensor, or a temperature sensor.

The communication component 1116 is configured to facilitate wired or wireless communications between the UE 1100 and other devices. The UE 1100 may access a wireless network based on a communication standard, such as WiFi, 2G or 3G, or a combination thereof. In one exemplary embodiment, the communication component 1116 receives broadcast signals or broadcast related information from an external broadcast management system via a broadcast channel. In an exemplary embodiment, the communication component 1116 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the UE 1100 may be implemented by at least one Application Specific Integrated Circuit (ASIC), Digital Signal Processor (DSP), Digital Signal Processing Device (DSPD), Programmable Logic Device (PLD), Field Programmable Gate Array (FPGA), controller, microcontroller, microprocessor or other electronic components to implement the above method shown in FIG. 6.

In an exemplary embodiment, there is also provided a non-transitory computer-readable storage medium including instructions, such as a memory 1104 including instructions, which are executable by the processor 1120 of the UE 1100 to perform the above methods. For example, the non-transitory computer-readable storage medium may be a ROM, random access memory (RAM), CD-ROM, magnetic tape, floppy disk, optical data storage device, and the like.

Other embodiments of the invention will readily occur to those skilled in the art upon consideration of the specification and practice of the invention disclosed herein. The disclosure is intended to cover any variations, uses, or adaptations of the invention that follow the general principles of the invention and include common knowledge or techniques in the technical field not disclosed by the disclosure. The specification and examples are to be regarded as exemplary only, with the true scope and spirit of the disclosure being indicated by the following claims.

It is to be understood that the disclosure is not limited to the precise structures described above and illustrated in the accompanying drawings, and that various modifications and changes may be made without departing from the scope thereof. The scope of the disclosure is limited only by the appended claims.

## Claims

1. A carrier scheduling method, comprising:
sending a configuration message of a scheduled carrier group to a user equipment UE; and
sending, to the UE, an association relationship between the scheduled carrier group and a scheduling carrier corresponding to the scheduled carrier group, wherein the configuration message of the scheduled carrier group and the association relationship are configured to indicate the UE to determine the scheduled carrier group and the scheduling carrier.

2. The method according to claim 1, wherein the configuration message of the scheduled carrier group comprises numbers of one or more scheduled carrier groups, and numbers of scheduled carriers comprised in each scheduled carrier group.

3. The method according to claim 1, wherein when the configuration message of the scheduled carrier group comprises one or more scheduled carrier groups, the method further comprises:
sending indication information to the UE, wherein the indication information is configured to indicate the UE a number of the scheduling carrier corresponding to each of the scheduled carrier groups.

4. The method according to any one of claims 1-3, wherein sending the configuration message of the scheduled carrier group to the UE comprises:
sending the configuration message of the scheduled carrier group to the UE via a first radio resource control RRC signaling.

5. The method according to claim 3, wherein sending the indication information to the UE comprises:
sending the indication information to the UE via a first medium access control control element MAC CE signaling.

6. The method according to claim 3, wherein sending the indication information to the UE further comprises:
sending the indication information to the UE via a second RRC signaling and a second MAC CE signaling.

7. The method according to claim 3, wherein sending the indication information to the UE comprises:
sending the indication information to the UE via a first downlink control information DCI signaling.

8. The method according to claim 1, wherein sending to the UE the association relationship between the scheduled carrier group and the scheduling carrier corresponding to the scheduled carrier group comprises:
sending the association relationship to the UE via a third RRC signaling and/or a third MAC CE signaling.

9. The method according to claim 1, further comprising:
sending a scheduling mode indication message to the UE, wherein the scheduling mode indication message is configured to indicate a scheduling mode adopted by the UE, wherein the scheduling mode comprises a joint scheduling mode and an independent scheduling mode.

10. The method according to claim 9, wherein sending the scheduling mode indication message to the UE comprises:
sending the scheduling mode indication message to the UE via a fourth RRC signaling.

11. The method according to claim 9, wherein sending the scheduling mode indication message to the UE comprises:
sending the scheduling mode indication message to the UE via a fourth MAC CE signaling.

12. The method of claim 11, further comprising:
switching a scheduling mode of the scheduled carrier group corresponding to the UE, in response to receiving a hybrid automatic repeat request-acknowledgement HARQ-ACK message corresponding to a physical downlink shared channel PDSCH carrying the fourth MAC CE signaling.

13. The method according to claim 9, wherein sending the scheduling mode indication message to the UE comprises:
sending the scheduling mode indication message to the UE via a second DCI signaling.

14. The method according to claim 13, further comprising:
switching a scheduling mode of the scheduled carrier group corresponding to the UE, in response to receiving a feedback acknowledgment signal ACK of the second DCI signaling, or in response to receiving a HARQ-ACK of a PDSCH scheduled by the second DCI signaling, or in response to receiving a uplink physical shared channel PUSCH scheduled by the second DCI signaling.

15. A method for switching a scheduling mode, comprising:
sending a scheduling mode indication message to a UE, wherein the scheduling mode indication message is configured to indicate a scheduling mode adopted by the UE, and the scheduling modes comprise a joint scheduling mode and an independent scheduling mode; and
receiving a response message from the UE, and switching a scheduling mode of a scheduled carrier group corresponding to the UE according to the response message.

16. The method according to claim 15, wherein sending the scheduling mode indication message to the UE comprises:
sending the scheduling mode indication message to the UE via an RRC signaling.

17. The method according to claim 15, wherein sending the scheduling mode indication message to the UE comprises:
sending the scheduling mode indication message to the UE via an MAC CE signaling.

18. The method according to claim 17, wherein switching the scheduling mode corresponding to the UE according to the response message comprises:
receiving a HARQ-ACK message corresponding to a PDSCH of the MAC CE signaling, and switching the scheduling mode of the scheduled carrier group corresponding to the UE according to the HARQ-ACK message corresponding to the MAC CE signaling.

19. The method according to claim 15, wherein sending the scheduling mode indication message to the UE comprises:
sending the scheduling mode indication message to the UE via a DCI signaling.

20. The method according to claim 19, wherein switching the scheduling mode corresponding to the UE according to the response message needs to satisfy at least one of following conditions:
after receiving a feedback acknowledgment signal ACK of the DCI signaling;
after receiving a HARQ-ACK of a PDSCH scheduled by the DCI signaling; or
after receiving a PUSCH scheduled by the DCI signaling.

21. A carrier scheduling method, comprising:
receiving a configuration message of a scheduled carrier group sent by a network device;
receiving an association relationship between the scheduled carrier group and a scheduling carrier corresponding to the scheduled carrier group sent by the network device; and
determining the scheduled carrier group and the scheduling carrier according to the configuration message of the scheduled carrier group and the association relationship.

22. The method according to claim 21, wherein determining the scheduled carrier group and the scheduling carrier according to the configuration message of the scheduled carrier group and the association relationship comprises:
determining the scheduled carrier group to which each scheduled carrier belongs according to the configuration message of the scheduled carrier group; and
determining the scheduling carrier according to the association relationship between the scheduled carrier group and the corresponding scheduled carrier.

23. The method according to claim 21, wherein the configuration message of the scheduled carrier group comprises numbers of one or more scheduled carrier groups, and numbers of scheduled carriers comprised in each scheduled carrier group.

24. The method according to claim 21, wherein when the configuration message of the scheduled carrier group comprises one or more scheduled carrier groups, the method further comprises:
receiving indication information sent by the network device, wherein the indication information is configured to indicate the UE a number of the scheduling carrier corresponding to each of the scheduled carrier groups.

25. The method according to claim 21, wherein receiving the configuration message of the scheduled carrier group sent by the network device comprises:
receiving the configuration message of the scheduled carrier group sent by the network device via a first RRC signaling.

26. The method according to claim 21, wherein receiving the association relationship between the scheduled carrier group and the scheduling carrier sent by the network device comprises:
receiving the association relationship sent by the network device via a third RRC signaling and/or a third MAC CE signaling.

27. The method according to claim 21, further comprising:
receiving a scheduling mode indication message sent by the network device, wherein scheduling modes comprise a joint scheduling mode and an independent scheduling mode; and
determining a scheduling mode adopted by the UE according to the scheduling mode indication message.

28. The method according to claim 27, wherein receiving the scheduling mode indication message sent by the network device comprises:
receiving the scheduling mode indication message sent by the network device via a fourth RRC signaling.

29. The method according to claim 27, wherein receiving the scheduling mode indication message sent by the network device comprises:
receiving the scheduling mode indication message sent by the network device via a fourth MAC CE signaling.

30. The method according to claim 27, wherein receiving the scheduling mode indication message sent by the network device comprises:
receiving the scheduling mode indication message sent by the network device via a second DCI signaling.

31. A carrier scheduling apparatus, comprising:
a sending module, configured to send a configuration message of a scheduled carrier group to a UE, and send to the UE an association relationship between the scheduled carrier group and a scheduling carrier corresponding to the scheduled carrier group, wherein the configuration message of the scheduled carrier group and the association relationship are configured to indicate the UE to determine the scheduled carrier group and the scheduling carrier.

32. An apparatus for switching a scheduling mode, comprising:
a sending module, configured to send a scheduling mode indication message to a UE, wherein the scheduling mode indication message is configured to indicate a scheduling mode adopted by the UE, and the scheduling modes comprise a joint scheduling mode and an independent scheduling mode;
a receiving module, configured to receive a response message from the UE; and
a switching module, configured to switch a scheduling mode of a scheduled carrier group corresponding to the UE according to the response message.

33. A carrier scheduling apparatus, comprising:
a receiving module, configured to receive a configuration message of a scheduled carrier group sent by a network device, and receive an association relationship between the scheduled carrier group and a scheduling carrier corresponding to the scheduled carrier group sent by the network device; and
a determining module, configured to determine the scheduled carrier group and the scheduling carrier according to the configuration message of the scheduled carrier group and the association relationship.

34. A communication device, comprising a transceiver; a memory; a processor, respectively connected to the transceiver and the memory, and configured to, when executing computer-executable instructions on the memory, control signal transmission and reception of the transceiver and implement the carrier scheduling method of any of claims 1 to 14, or the method for switching a scheduling mode of any of claims 15 to 20, or the carrier scheduling method of any of claims 21 to 30.

35. A computer storage medium having computer-executable instructions stored thereon, wherein when the computer-executable instructions are executed by a processor, the carrier scheduling method of any of claims 1 to 14, or the method for switching a scheduling mode of any of claims 15 to 20, or the carrier scheduling method of any of claims 21 to 30 is implemented.
